# EUROPÄISCHE PATENTSCHRIFT

(11) **EP 1 033 897 B1**
(45) Veröffentlichungstag und Bekanntmachung des Hinweises auf die Patenterteilung: **13.06.2007**
(21) Anmeldenummer: 99440021.6
(22) Anmeldetag: 05.02.1999
(51) Int. Cl.: H04Q 7/38, H04Q 3/00, H04M 3/46

(54) **Verfahren zur Bereitstellung eines persönlichen Kommunikationsdienstes sowie Verfahren zur Anrufleitung und Dienststeuereinheit**
Method for providing a personal communication service, method for call delivery and service control point
Procédé pour fournir un service de communication personnel, procédé pour l'établissement d'une communication et point de commande de service

(43) Veröffentlichungstag der Anmeldung: 06.09.2000
(73) Patentinhaber: Alcatel Lucent, 75008 Paris (FR)
(72) Erfinder: Lautenschlager, Wolfgang, 71287 Weissach-Flucht (DE)
(74) Vertreter: Schmidt, Werner Karl

(56) Entgegenhaltungen:
- EP-A- 0 526 764
- EP-A- 0 738 093
- EP-A- 0 851 702
- WO-A-95/12268
- WO-A-98/57515
- US-A- 5 454 032
- US-A- 5 901 359

## Beschreibung

Die Erfindung betrifft ein Verfahren, um Teilnehmern, die mit mindestens einem Festnetzendgerät und mindestens einem Mobilfunkendgerät in einem aus mehreren Festnetzen und Mobilfunknetzen bestehenden Kommunikationsnetzes registriert sind, einen persönlichen Kommunikationsdienst bereitzustellen, nach dem Oberbegriff von Anspruch 1, ein Verfahren zur Anrufleitung eines Rufes nach dem Oberbegriff von Anspruch 9, und eine Dienststeuereinheit nach dem Oberbegriff von Anspruch 10.

Die Erfindung geht von einem Kommunikationssystem aus, wie es in EP 0738093 beschrieben ist. In diesem Kommunikationssystem ist ein Teilnehmer unter einer einheitlichen Rufnummer erreichbar, obwohl er über mehrere verschiedenartige Kommunikationsendgeräte, beispielsweise über ISDN, GSM oder DECT Endgeräte, verfügt, unter denen er abwechselnd erreichbar ist.

Eine an den Teilnehmer gerichtete Verbindungsanforderung wird zu einem zentralen Netzknoten des Kommunikationssystems geleitet. Dieser Knoten werte die persönliche Rufnummer des Teilnehmers in die physikalische Rufnummer desjenigen Endgerätes um, unter dem der Teilnehmer registriert ist. Die Verbindung wird somit im Folgenden zu demjenigen Endgerät aufgebaut, unter dem der Teilnehmer registriert ist.

Die Registrierung erfolgt hierbei manuell durch explizites Absenden einer Steuernachricht vom Teilnehmer an den zentralen Knoten oder automatisch durch ein DECT Zugangssystem (DECT = Digital European Cordless Telephone) des Festnetzes, in dessen Funkbedeckungsbereich sich der Teilnehmer mit seinem DECT Endgerät bewegt. Die Funk-Festnetzstation des DECT Zugangssystems erkennt hierbei den Eintritt des DECT Endgerätes in ihren Funkbedeckungsbereich und sendet eine Registrierungsnachricht zu dem zentralen Knoten.

Der Erfindung liegt nun die Aufgabe zugrunde, die Flexibilität der durch solch einen persönlichen Kommunikationsdienst bereitgestellten Anrufleitung zu erhöhen.

Diese Aufgabe wird gelöst durch ein Verfahren zur Bereitstellung eines persönlichen Kommunikationsdienst nach der Lehre von Anspruch 1, ein Verfahren zur Anrufleitung nach der Lehre von Anspruch 9, und eine Dienststeuereinheit nach' der Lehre von Anspruch 10.

Der Erfindung liegt hierbei der Gedanke zugrunde, daß eine Dienststeuereinheit, wenn sie von einem Ruf an einen Teilnehmer mit mehreren Endgeräten getriggert wird, automatisch mittels Signalisierungsnachrichten Statusdaten der Mobilfunkendgeräte dieses Teilnehmers von den Mobilfunknetzen abfrägt, denen diese Mobilfunkendgeräte zugeordnet sind. Mittels dieser Statusdaten trifft die Dienststeuereinheit sodann die Entscheidung, an welches der Endgeräte des Teilnehmers der Ruf weiterzuleiten ist.

Ein Vorteil der Erfindung besteht in der höheren Benutzerfreundlichkeit: Die Anrufweiterleitung ist nicht mehr durch explizite Registrierungen fixiert, sondern kann dynamisch anhand einer Vielzahl von Daten entsprechend der Augenblicklichen Situation reagieren. Dies ermöglicht es, auf expliziete Registrierungsprozeduren durch den Teilnehmer zu verzichten. Durch die Vielzahl der mittels des erfindungsgemäßen Verfahrens bereitstellbaren Daten, die ein aktuelles Abbild der augenblicklichen bereitstellen und mittels persönlicher Benutzerprofile kann die Anrufweiterleitung sehr genau auf die Bedürfnisse der Teilnehmer angepaßt werde.

Ein weiter Vorteil der Erfindung besteht darin, daß lediglich eine neuartige Dienststeuereinheit für die Durchführung des Verfahrens notwendig ist und ansonsten keinerlei Änderungen an Komponenten der existierenden Festnetze und Mobilfunknetze erforderlich sind. Die Durchführung der Erfindung erfordert weiter keine neuartigen Endgeräte, sie ist vielmehr mit allen existierenden Endgeräten durchführbar. Dadurch kann die Erfindung schnell und kostengünstig in bestehende Kommunikationssysteme integriert werden.

Vorteilhafte Ausgestaltungen der Erfindung sind den Unteransprüchen zu entnehmen.

Im folgenden wir die Erfindung anhand mehrerer Ausführungsbeispiele unter Zuhilfenahme beiliegender Zeichnungen beispielhaft erläutert.
- Fig. 1: zeigt ein Blockschaltbild eines Kommunikationsnetzes mit einer erfindungsgemäßen Dienststeuereinheit.
- Fig. 2: zeigt eine funktionelle Darstellung einer erfindungsgemäßen Dienststeuereinheit nach Fig. 1.
- Fig. 3: zeigt ein Darstellung des Nachrichtenflusses in dem Kommunikationsnetz nach Fig. 1 bei der Durchführung der erfindungsgemäßen Verfahren.

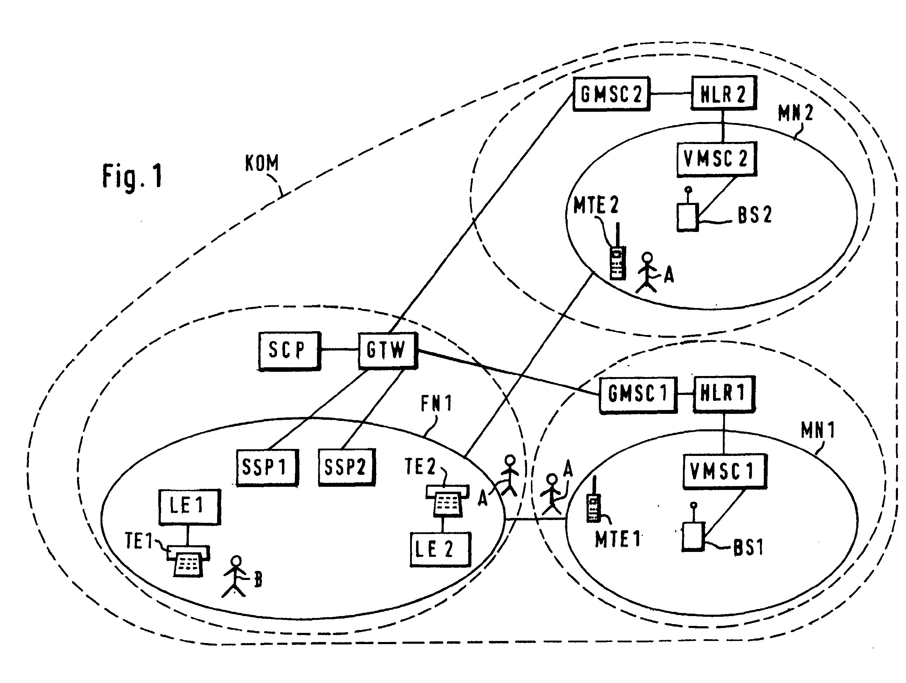

Fig. 1 zeigt ein Kommunikationsnetz KOM mit drei miteinander verbundenen Teilnetzen FN1, MN1 und MN2.

Das Teilnetz FN1 stellt ein Festnetz dar, das der Sprachkommunikation zwischen Endgeräten dient, beispielsweise ein ISDN-Fernsprechnetz (ISDN = Integrated Services Digital Network). Es ist natürlich auch möglich, daß neben Sprachkommunikation auch Bild- und Datenkommunikation über das Teilnetz FN1 möglich ist. Weiter kann das Teilnetz FN1 auch über Vermittlungsstellen beispielsweise gemäß dem DECT Standard (DECT = Digital European Cordless Telephone) verfügen, die die Anbindung von schnurlosen Endgeräten (cordless) an das Teilnetz FN1 ermöglichen.

Es ist auch möglich, daß das Kommunikationsnetz KOM neben dem Teilnetz FN1 über weitere Festnetze verfügt, die beispielsweise unterschiedlichen Netzbetreibern zugeordnet sind.

Die Teilnetze MN1 und MN2 stellen Mobilfunknetze nach dem GSM Standard (GSM= Global System for Mobility) dar. Die Teilnetze können auch unterschiedlichen technischen Standards entsprechen, beispielsweise kann es sich bei dem Teilnetz MN1 um ein Satellitenkommunikationssystem und bei dem Teilnetz MN2 um ein GSM Kommunikationssystem handeln. Es ist auch möglich, daß das Kommunikationsnetz KOM nur über das Teilnetz MN1, also nur über ein Mobilfunknetz verfügt, oder zusätzlich zu den Teilnetzen MN1 und MN2 über weitere Mobilfunknetze verfügt.

Das Teilnetz FN1 weist mehrere miteinander verbundene Vermittlungsstellen auf, von denen in Fig. 1 beispielhaft vier Vermittlungsstellen LE1, LE2, SSP1 und SSP2 gezeigt sind. Weiter weist das Kommunikationsnetz einen Signalisierungsknoten GTW und eine Dienststeuereinheit SCP auf, die mit den Vermittlungsstellen SSP1 und SSP2 über ein Signalisierungsnetz, beispielsweise gemäß dem ITU-T Signalisierungssystem Nr. 7 verbunden sind.

Die Vermittlungsstellen LE1 und LE2 stellen Teilnehmervermittlungsstellen dar. Von den an die Vermittlungsstellen LE1 und LE2 angeschlossen Endgeräte sind in Fig. 1 beispielhaft jeweils ein Endgerät TE1 bzw. TE2 gezeigt. Bei den Endgeräten TE1 und TE2 handelt es sich um Festnetz-Endgeräte, beispielsweise um ISDN Endgeräte. Das Endgerät TE1 ist dem Teilnehmer B und das Endgerät TE2 dem Teilnehmer A zugeordnet.

Die Vermittlungsstellen SSP1 und SSP2 stellen Dienstvermittlungsstellen dar. Bei auftreten eines Triggerereignisses, beispielsweise daß eine bestimmten Zielrufnummer in einem von der Dienstvermittlungsstelle vermittelten Ruf eingetragen ist, senden sie eine Dienstanforderungsnachricht mit einer entsprechenden Dienstkennung über das Signalisierungsnetz an die Dienststeuereinheit SCP. In der Dienststeuereinheit SCP wird sodann eine der Dienstkennung zugeordnete Dienstelogik aktiviert, die einen Dienst für den Ruf erbringt. Bei der Diensterbringung steuert hierbei die Dienststeuereinheit mittels Steuernachrichten die weitere Behandlung des Rufes durch die Vermittlungsstellen SSP1 und SSP. Es ist hierbei auch möglich, daß die Dienststeuereinheit SCP keine von einer Dienstvermittlungsstelle abgesetzte Einheit darstellt, sondern von einem auf der Rechnerplattform einer Dienstvermittlungsstelle ablaufendes Programm Modul gebildet wird.

Weiter ist es auch möglich, daß die Vermittlungsstellen LE1 und LE2 jeweils sowohl die Funktion einer Teilnehmervermittlungsstelle als auch die einer Dienstvermittlungsstelle erbringen.

Der Signalisierungsknoten GTW stellt die notwendigen Netzübergangsfunktionen für den Netzübergang von dem Signalisierungsnetz des Teilnetzes FN1 in die Signalisierungsnetze der Teilnetze MN1 und MN2 bereit. Beispiele für solche Netzübergangsfunktionen sind: Überwachungs- und Filterfunktionen (screening), Anpassung der Adressierung (global title translation). Auf den Signalisierungsknoten GTW könnte auch verzichtet werden.

Die Teilnetz MN1 und MN2 weisen jeweils eine Vielzahl von Mobilfunkvermittlungsstellen (MSC = Mobile Switching Center) und mit diesen verbundenen Funkfeststationen (BS = Base Station) auf, von denen in Fig. 1 beispielhaft vier Mobilfunkvermittlungsstellen GMSC1 und VMSC1 bzw. GMSC2 und VMSC2 und zwei Funkfeststationen BS1 bzw. BS2 gezeigt sind. Den Mobilfunkvermittlungsstellen der Teilnetze MN1 und MN2 sind weiter Heimatdatenbanken (HLR = Home Location Register) und Besucherdatenbanken (VLR = Visitor Location Register) zugeordnet, von denen in Fig. 1 beispielhaft zwei Heimatdatenbanken HLR1 bzw. HLR2 gezeigt sind. Diese Datenbanken sind über die Signalisierungsnetze der Teilnetze MN1 und MN2 mit den Mobilfunkvermittlungsstellen verbunden.

Von den in den Teilnetzen MN1 und MN2 registrierten Mobilfunkendgeräten sind in Fig. 1 beispielhaft nur zwei Endgeräte MTE1 bzw. MTE2 gezeigt, die beide dem Teilnehmer A zugeordnet sind und sich im Funkbedeckungsbereich der Funkfeststation BS1 bzw. BS2 befinden.

Die Mobilfunkvermittlungsstellen GMSC1 und GMSC2 stellen Netzübergangs-Vermittlungsstellen dar, die zusätzlich noch Netzübergangsfunktionen (siehe oben) für den Netzübergang vom Teilnetz FN1 in das Teilnetz MN1 bzw. MN2 erbringen. Diese Netzübergangsfunktionen könnten auch von einem speziellen Signalisierungsknoten erbracht werden.

Die Mobilfunkvermittlungsstellen GMSC1 und GMSC2 sind mit dem Signalisierungsknoten GTW des Teilnetzes FN1 verbunden und stellen mit diesem einen Netzübergang vom Signalisierungsnetz des Teilnetzes FN1 in die Teilnetze MN1 bzw. MN2 bereit.

Der Teilnehmer A verfügt über drei Endgeräte TE2, MTE1 und MTE2, unter denen er im Kommunikationsnetz KOM registriert ist. Es ist auch möglich, daß der Teilnehmer A noch über weitere in dem Kommunikationsnetz KOM registriert Endgeräte verfügt.

Jedem dieser Engeräte ist im jeweiligen Teilnetz mindestens eine Rufnummer zugeordnet. Bei diesen Rufnummern handelt es sich um geographische Rufnummern, es kann sich jedoch auch um persönliche Rufnummern (z. B. Vorwahl 07100) handeln. Von der Dienststeuereinheit SCP wird dem Teilnehmer A nun eine Teilnehmerrufnummer zugeordnet, unter der der Teilnehmer erreichbar ist, unabhängig davon, über welches der Endgeräte TE2, MTE1 und MET2 die Kommunikation dann schließlich geführt wird. Die Rufnummern der für den Teilnehmer A im Kommunikationsnetz KOM registrierten Endgeräte stellen damit netzinterne Rufnummern dar, die durch die Steuereinheit SCP vor den rufenden Teilnehmern verborgen werden. Es ist natürlich auch möglich, daß hierbei eine der Rufnummern der Endgeräte TE2, MTE1 oder MTE2 als Teilnehmerrufnummer verwendet wird.

Um eine Kommunikationsverbindung durch das Kommunikationsnetz KOM zu dem Teilnehmer A aufzubauen, wählt der Teilnehmer B die Teilnehmerrufnummer des Teilnehmers A. Die Vermittlungsstelle SSP1 erkennt anhand der Teilnehmerrufnummer, daß der vom Teilnehmer A initiierte Ruf an einen Teilnehmer gerichtet ist, der mit mindestens einem Festnetzendgerät und mindestens einem Mobilfunkendgerät in dem Kommunikationsnetzes KOM registriert ist. Sobald die Dienstvermittlungsstelle SSP1 solch einen Ruf erkennt, sendet sie eine Dienstanforderungsnachricht an die Dienststeuereinheit SCP, wodurch die Dienststeuereinheit SCP für diesen Ruf getriggert wird.

Wenn die Dienststeuereinheit SCP derart für einen Ruf getriggert worden ist, ermittelt sie zuerst den Teilnehmer, an den der Ruf gerichtet ist, hier beispielsweise den Teilnehmer A. Anschließend fordert sie von den Mobilfunknetzen des Kommunikationsnetzes KOM, in denen dem ermittelten Teilnehmer zugeordnete Mobilfunkendgeräte registriert sind, mittels Austausch von Signalisierungsnachichten Statusdaten über die dem Teilnehmer zugeordneten Mobilfunkendgeräte an. Die Dienststeuereinheit SCP fordert so mittels Austausch von Signalisierungsnachrichten über den Signalisierungsknoten GTW und die Mobilfunkvermittlungsstellen GMSC1 bzw. GMSC2 Statusdaten der Endgeräte MTE1 und MTE2 von den Mobilfunknetzen MN1 bzw. MN2 an. Mittels der so angeforderten Statusdaten wählt die Dienststeuereinheit SCP sodann dasjenige der Endgeräte TE2, MTE1 und MTE2 des Teilnehmers A aus, an das der Ruf zu leiten ist. Die Dienststeuereinheit SCP steuert sodann durch Senden einer entsprechenden Steuernachricht an die Dienstvermittlungsstelle SSP1 das Weiterleiten des Rufes an das von ihr ausgewählte Endgerät, indem sie das Eintragen der Rufnummer dieses ausgewählten Endgerätes als Zielrufnummer des Rufes durch die Dienstvermittlungsstelle SSP1 veranlaßt.

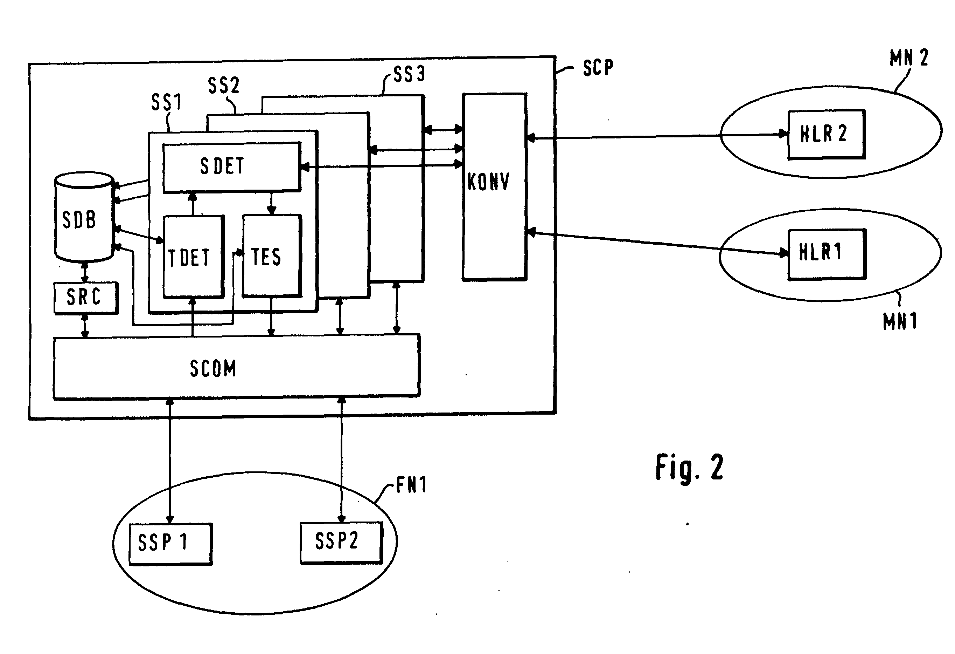

Anhand von Fig. 2 wird nun der detaillierte Aufbau der Dienststeuereinheit SCP verdeutlicht.

Fig. 2 zeigt die Dienststeuereinheit SCP, das Teilnetz FN1 mit den Dienstvermittlungsstellen SSP1 und SSP2, und die Teilnetze MN1 und MN2 mit den Heimatdateien HLR1 und HLR2.

Die Dienststeuereinheit SCP wird von einer System plattform mit ein oder mehreren miteinander verbundenen Rechnern und peripheren Komponenten gebildet, auf der Applikationsprogramme zur Durchführung der Funktionen der Dienststeuereinheit SCP ablaufen. Aus funktioneller Sicht weist die Dienststeuereinheit SCP drei Steuereinheiten SCOM, KONV und SRC, drei Dienstprozesse SS1 bis SS3 und eine Datenbank SDB auf.

Die Steuereinheit SCOM stellt zum einen die hard- und softwaremäßigen Funktionen zur Bereitstellung der Kommunikation mit den Dienstvermittlungsfunktionen der Dienstvermittlungsstellen SSP1 und SSP2 und mit den Dienstvermittlungsfunktionen der weiteren Dienstvermittlungsstellen des Teilnetzes FN1 bereit. Sie bearbeitet die Nr. 7 Transportprotokolle zur Kommunikation über das Signalisierungsnetz und die höheren Protokollschichten, die gemäß der IN Architektur für die Kommunikation zwischen Dienststeuer- und Dienstvermittlungsfunktionen vorgesehen sind. Diese sind insbesondere das TCAP Protokoll (TCAP = Transport Capability Part) und das INAP Protokoll (INAP = Intelligent Network Applikation Part).

Es ist hierbei auch möglich, daß für die Kommunikation zwischen der Dienststeuereinheit SCP und den Dienstvermittlungsstellen SSP1 und SSP2 ein Rechnernetz, beispielsweise ein LAN (Local Area Network) verwendet wird und somit die einem solchen Rechnernetz entsprechenden Transportprotokolle von der Steuereinheit SCONTR bearbeitet werden. Das INAP Protokoll könnte weiter auch durch das MAP Protokoll (MAP = ... ) ersetzt werden.

Zum anderen verwaltet die Steuereinheit SCOM die Dienstprozesse, ordnet an der Dienststeuereinheit ankommende Nachrichten Dienstprozessen zu und ist für die Erzeugung von Dienstprozessen zuständig: Wird die Dienststeuereinheit durch den Empfang einer Dienstanforderungsnachricht für einen Ruf getriggert, so erzeugt die Steuereinheit einen Dienstprozeß. Der Dienstprozeß steuert sodann die Diensterbringung für diesen Ruf, Ist die Diensterbringung beendet, so wird der Dienstprozeß gelöscht. Wie in Fig. 2 dargestellt, werden zur Zeit von der Dienststeuereinheit SCP parallel drei Dienstprozesse SS1 bis SS3 durchgeführt, die Dienststeuereinheit SCP ist somit gerade für drei Rufe getriggert.

Die Datenbank SDB enthält Daten, die Teilnehmerrufnummern Rufnummern der Teilnetze FN1, MN1 und MN2 zuordnen: Jeder Teilnehmerrufnummer sind hierbei die Rufnummern derjenigen Endgeräte des Kommunikationsnetzes KOM zugeordnet, die in dem Kommunikationsnetz KOM für den Teilnehmer registriert sind, der durch die Teilnehmerrufnummer identifiziert wird. Weiter sind der Teilnehmerrufnummer weitere Daten zugeordnet, die als Auswahlparameter bei der Auswahlprozedur zur Auswahl der Rufnummer, an die ein Ruf gerichtet wird, verwendet werden und somit diese Auswahl mitbestimmen. Dies Daten bestimmten für jeden Teilnehmer ein persönliche Auswahlprofil.

Es ist auch möglich, daß einem Teilnehmer in der Datenbank SDB mehrere unterschiedliche funktionelle Teilnehmerrufnummern zugeordnet werden, die unterschiedliche Funktionen des Teilnehmers betreffen. Eine Teilnehmernummer würde somit beispielsweise auf einen Teilnehmer verweisen, dem wiederum Rufnummern und Auswahlparameter zugeordnet sind.

Die Steuereinheit SRC verwaltet die Durchführung von Änderungen in den Daten der Datenbank SDB. Solche Änderungen (Auswahlparameter, zugeordnete Rufnummern) können selbständig von Teilnehmern durchgeführt werden, der damit insbesondere sein perönliches Auswahlprofil festlegen und ändern kann. Eine Kommunikation zwischen Teilnehmer und Steuereinheit SRC wird durch Wahl einer bestimmen Dienstrufnummer aktiviert, die die Steuereinheit SRC für den entsprechenden Ruf aktiviert.

Im folgenden wird die Funktionsweise der Dienstprozesse SS1 bis SS3 beispielhaft anhand des Dienstprozesses SS1 erläutert:

Der Dienstprozeß SS1 weist drei Funktionen TDET, SDET und TES auf.

Die Funktion TDET empfängt von der Steuereinheit SCOM die Ziel-Teilnehmerrufnummer desjenigen Rufes, für den die Steuereinheit SCP getriggert worden ist und ermittelt mittels Zugriff auf die Datenbank SDB die Rufnummern derjenige Endgeräte des Kommunikationsnetzes KOM, die für den durch diese Teilnehmerrufnummer spezifizierten Teilnehmer im Kommunikationsnetz KOM registriert sind.

Die Funktion SDET bestimmt aus den ermittelten Rufnummern, welche dieser Rufnummern Mobilfunkendgeräten zugeordnet sind. Anschließend fordert sie mittels Zugriff auf die Steuereinheit KONV aktuelle Statusdaten über diese Mobilfunkendgeräte von den jeweiligen Mobilfunknetzen an, in den die ermittelten Mobilfunkendgeräte registriert sind. Angeforderte Statusdaten sind beispielsweise: Mobilfunkendgeräte aktiviert/ deaktiviert, Eingerichtete Rufumleitung, Aufenthaltsort des Mobilfunkendgerätes.

Die Funktion TES wählt mittels dieser angeforderten Zustandsdaten und mittels Zugriff auf die der Teilnehmerrufnummer zugeordneten Auswahlparameter aus den für die Teilnehmerrufnummer ermittelten Rufnummern nun diejenige aus, an die der Ruf weiterzuleiten ist, für den der Dienstprozeß SS1 initiiert wurde. Auswahlkriterien könnten hierbei beispielsweise sein: Prioritätsliste für Endgeräte, Mobilfunkendgerät aktiviert/nicht aktiviert, Aufenthaltsbereiche der Mobilfunkendgeräte zueinander oder zu Festnetz/ Cordless Endgeräten.

Die Steuereinheit KONV fordert die Statusdaten mittels Austausch von Signalisierungsnachrichten, beispielsweise MAP Nachrichten, mit den entsprechenden Mobilfunknetzen an. Eine Möglichkeit besteht hierbei darin, daß sie zur Anforderung der Statusdaten eine MAP Nachricht an diejenige Heimatdatenbank des jeweiligen Mobilfunknetzes sendet, in der der Teilnehmerdatensatz des jeweiligen Mobilfunkendgerätes abgespeichert ist. Mittels dieser Nachricht fordert sie diese Datenbank dann auf, die entsprechenden Statusdaten an die Dienststeuereinheit SCP zurückzusenden. Entsprechende Signalisierungsnachrichten zur Statusabfrage können auch direkt an Mobilfunkvermittlungsstellen gesendet werden.

Die Steuereinheit KONV stellt hierbei vorteilhafterweise den Dienstprozessen SS1 bis SS3 eine Konverterfunktion zur Verfügung, die IN Nachrichten auf einen GSM Mechanismus zur Statusabfrage umsetzt. Die Konverterfunktion unterstützt hierzu weiter beispielsweise eine INAP Protokoll/ MAP Protokoll Konvertierung für die Statusanforderungsprozedur. Dadurch benötigen die Dienstprozesse keine Kenntnis über die Prozeduren und Protokolle zur Statusabfrage, ihre Komplexität wird wesentlich veringert.

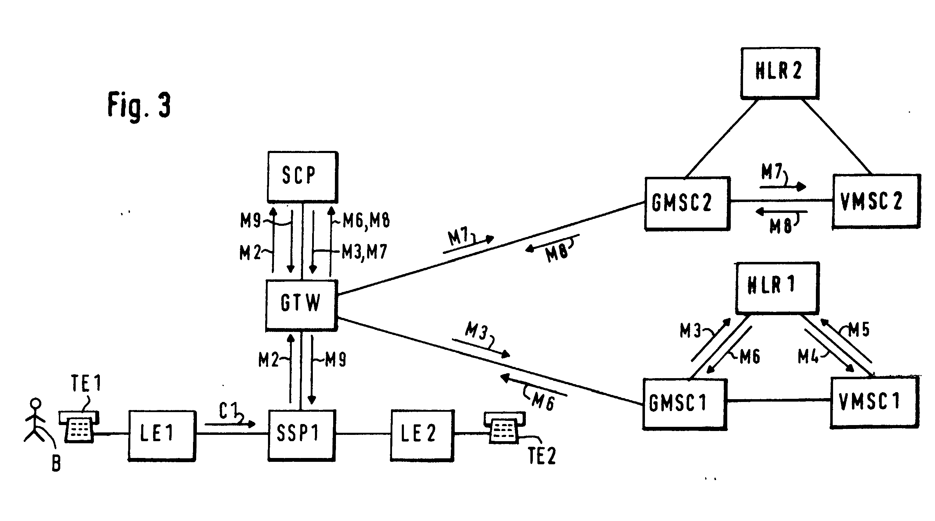

Anhand von Fig. 3 wird nun der bei der Durchführung eines erfindungsgemäßen Verfahrens entstehenden Nachrichtenfluß beispielhaft erläutert.

Fig. 3 zeigt die Vermittlungsstellen LE1, LE2 und SSP1, die Mobilfunkvermittlungsstellen GMSC1, GMSC2, VMSC1 und VMSC2, den Signalisierungsknoten GTW, die Dienststeuereinheit SCP, die Heimatdatenbanken HLR1 und HLR2, einen Ruf C1 und acht Nachrichten M2 bis M9.

Die Vermittlungsstelle SSP1 erkennt, daß der an den Teilnehmer A gerichtete Ruf C1 eine mehreren Rufnummern zugeordnete Teilnehmerrufnummer als Ziel-Rufnummer enthält und sendet eine Dienstanforderungsnachricht, die Nachricht M2, über den Signalisierungsknoten GTW an die Dienststeuereinheit SCP. Die Steuereinheit KONV sendet daraufhin Anforderungsnachrichten, die Nachrichten M3 und M7, an die Teilnetze MN1 und MN2. Das senden der Nachrichten M3 und M7 kann hierbei parallel oder sequentiell erfolgen.

Die Nachricht M3 wird über den Signalisierungsknoten GTW und die Mobilfunkvermittlungsstelle GMSC1 an die Heimatdatei HLR1 geleitet. Der dort initiierte Statusabfrageprozeß ermittelt die angeforderten Statusinformationen, in dem er von der Mobilfunkvermittlungsstelle VMSC1, in deren Bereich sich das Endgerät MTE1 augenblicklich befindet, mittels der Nachricht M4 Statusdaten über das Endgerät MTE1 abfrägt. Diese angeforderten Daten werden von dem Statusabfrageprozeß mit der Nachricht M5 empfangen und in einer Antwortnachricht, der Nachricht M6, über die Mobilfunkvermittlungsstelle GMSC1 und den Signalisierungsknoten GTW an die Dienststeuereinheit SCP gesendet.

Die Nachricht M7 wird über den Signalisierungsknoten GTW und die Mobilfunkvermittlungsstelle GMSC2 direkt an die Mobilfunkvermittlungsstelle VMSC2 geleitet, die diejenige Mobilfunkvermittlungsstelle des Teilnetzes MN2 darstellt, in deren Bereich sich das Endgerät MTE2 augenblicklich befindet. Die Nachricht M7 startet einen Statusabfrageprozeß in der Mobilfunkvermittlungsstelle GMSC2. Die von dem Statusabfrageprozeß ermittelten Daten werden sodann mit der Nachricht M8 über die Mobilfunkvermittlungsstelle GMSC2 und den Signalisierungsknoten GTW an die Dienststeuereinheit SCP gesendet.

Die Funktion TES ermittelt sodann mittels der empfangenen Statusdaten über die Endgeräte MTE1 und MTE2 dasjenige Endgerät des Teilnehmers A, an das der Ruf C1 zu richten ist und steuert mittels der Nachricht M9, die über den Signalisierungsknoten GTW an die Dienstvermittlungsstelle SSP1 geleitet wird, daß der Ruf C1 an dieses Endgerät weitergeleitet wird.

## Patentansprüche

1. Verfahren, um Teilnehmern (A), die mit mindestens einem Festnetzendgerät (TE2) und mindestens einem Mobilfunkendgerät (MTE1, MTE2) in einem aus mehreren Festnetzen (FN1) und Mobilfunknetzen (MN1, MN2) bestehenden Kommunikationsnetz (KOM) registriert sind, einen persönlichen Kommunikationsdienst bereitzustellen, wobei bei dem Verfahren eine Dienststeuereinheit (SCP) von einer Dienstvermittlungsstelle (SSP1) getriggert wird, wenn die Dienstvermittlungsstelle (SSP1) einen an einen solchen Teilnehmer gerichteten Ruf (C1) erkennt und daß die Dienststeuereinheit (SCP) das Weiterleiten des Rufes (C1) durch die Dienstvermittlungsstelle (SSP1) an ein von der Dienststeuereinheit (SCP) ausgewähltes Endgerät der registrierten Endgeräte des Teilnehmers steuert,
**dadurch gekennzeichnet, daß** die Dienststeuereinheit (SCP), wenn sie durch den Empfang einer Dienstanforderungsnachricht (M2) für einen an einen bestimmten Teilnehmer (A) gerichteten Ruf (C1) getriggert wird, mittels Austausch von Signalisierungsnachichten (M3 bis M8) Statusdaten über das dem bestimmten Teilnehmer (A) zugeordnete mindestens eine Mobilfunkendgerät (MTE1, MTE2) von dem jeweiligen Mobilfunknetz (MN1, MN2) anfordert, in dem das jeweilige dem bestimmten Teilnehmer (A) zugeordnete mindestens eine Mobilfunkendgerät registriert ist, und daß die Dienststeuereinheit (SCP) mittels der angeforderten Statusdaten dasjenige Endgeräte des bestimmten Teilnehmers (A) auswählt, an das der Ruf (C1) zu leiten ist, für den die Dienststeuereinheit (SCP) getriggert worden ist.

2. Verfahren nach Anspruch 1, **dadurch gekennzeichnet, daß** die Dienststeuereinheit (SCP) Statusdaten über das dem bestimmten Teilnehmer zugeordnete mindestens eine Mobilfunkendgerät (MTE1, MTE2) mittels Austausch von MAP Nachrichten anfordert.

3. Verfahren nach Anspruch 2, **dadurch gekennzeichnet, daß** zur Anforderung der Statusdaten eine MAP Nachricht (M3) an diejenige Heimatdatenbank des jeweiligen Mobilfunknetzes (MN1) gesendet wird, in der der Teilnehmerdatensatz des jeweiligen mindestens einen Mobilfunkendgerätes (MTE1) des bestimmten Teilnehmers (A) abgespeichert ist.

4. Verfahren nach Anspruch 1, **dadurch gekennzeichnet, daß d**ie Dienststeuereinheit (SCP) die Statusdaten mittels eines Konverters (KONV) anfordert, der IN Nachrichten auf einen GSM Mechanismus zur Statusabfrage umsetzt.

5. Verfahren nach Anspruch 4, **dadurch gekennzeichnet, daß** der Konverter (KONV) eine INAP Protokoll/ MAP Protokoll Konvertierung durchführt.

6. Verfahren nach Anspruch 1, **dadurch gekennzeichnet, daß** die Dienststeuereinheit (SCP) zur Weiterleitung des Rufes (C1) die im Ruf eingetragene Ziel-Teilnehmerrufnummer des bestimmten Teilnehmers (A) auf eine der netzinternen Rufnummern der im Kommunikationsnetz (KOM) registrierten Endgeräte (TE2, MTE1, MTE2) des bestimmten Teilnehmers (A) umwertet.

7. Verfahren nach Anspruch 1, **dadurch gekennzeichnet, daß** einem Teilnehmer von der Dienststeuereinheit mehrere unterschiedliche funktionelle Teilnehmerrufnummern zugeordnet werden, die unterschiedliche Funktionen des Teilnehmers betreffen, und daß die Auswahl aufgrund der im Ruf eingetragenen funktionellen Teilnehmerrufnummer und der angeforderten Statusdaten des dem Teilnehmer zugeordneten mindestens einen Mobilfunkendgerätes erfolgt.

8. Verfahren nach Anspruch 1, **dadurch gekennzeichnet, daß** die Dienststeuereinheit, wenn der bestimmte Teilnehmer mit einem Mobilfunkendgerät in verschiedenen Mobilfunknetzen registriert ist, für dieses Endgerät mittels Austausch von Signalisierungsnachichten Statusdaten von diesen verschiedenen Mobilfunknetzen anfordert.

9. Verfahren zur Anrufleitung eines Rufes (C1), der an einen Teilnehmer (A) gerichtet ist, der mit mindestens einem Festnetzendgerät (TE2) und mindestens einem Mobilfunkendgerät (MTE1, MTE2) in einem aus mehreren Festnetzen (FN1) und Mobilfunknetzen (MN1, MN2) bestehenden Kommunikationsnetz (KOM) registriert ist, wobei bei dem Verfahren eine Dienstvermittlungsstelle (SSP1) eine Dienststeuereinheit (SCP) triggert, wenn die Dienstvermittlungsstelle (SSP1) einen an den Teilnehmer (A) gerichteten Ruf erkennt, und daß die Dienststeuereinheit (SCP) das Weiterleiten des Rufes (C1) durch die Dienstvermittlungsstelle (SSP1) an ein von der Dienststeuereinheit (SCP) ausgewähltes Endgerät der registrierten Endgeräte (TE2, MTE1, MTE2) des Teilnehmers steuert,
**dadurch gekennzeichnet, daß** die Dienststeuereinheit (SCP), wenn sie durch den Empfang einer Dienstanforderungsnachricht (M2) für den an den Teilnehmer gerichteten Ruf (C1) getriggert wird, mittels Austausch von Signalisierungsnachichten (M3 bis M8) Statusdaten über das dem Teilnehmer zugeordnete mindestens eine Mobilfunkendgeräte (MTE1, MTE2) von dem jeweiligen Mobilfunknetz (MN1, MN2) anfordert, in dem das dem Teilnehmer zugeordnete mindestens eine Mobilfunkendgerät registriert ist, und daß die Dienststeuereinheit (SCP) mittels der angeforderten Statusdaten dasjenige Endgeräte des Teilnehmers (A) auswählt, an das der Ruf (C1) zu leiten ist.

10. Dienststeuereinheit (SCP), um Teilnehmern (A), die mit mindestens einem Festnetzendgerät (TE2) und mindestens einem Mobilfunkendgerät (MTE1, MTE2) in einem aus mehreren Festnetzen (FN1) und Mobilfunknetzen (MN1, MN2) bestehenden Kommunikationsnetz (KOM) registriert sind, einen persönlichen Kommunikationsdienst bereitzustellen, wobei die Dienststeuereinheit (SCP) so ausgestaltet ist, daß sie, wenn sie von einer Dienstvermittlungsstelle (SSP1, SSP2) für einen an einen solchen Teilnehmer gerichteten Ruf (C1) getriggerten worden ist, das Weiterleiten des Rufes (C1) durch die Dienstvermittlungsstelle (SSP1, SSP2) an ein ausgewähltes Endgerät der registrierten Endgeräte (TE2, MTE1, MTE2) des Teilnehmers steuert,
**dadurch gekennzeichnet, daß** die Dienststeuereinheit (SCP) weiter so ausgestaltet ist, daß sie, wenn sie durch den Empfang einer Dienstanforderungsnachricht (M2) für einen an einen bestimmten Teilnehmer (A) gerichteten Ruf (C1) getriggert wird, mittels Austausch von Signalisierungsnachichten (M3 bis M8) Statusdaten über das dem bestimmten Teilnehmer (A) zugeordnete mindestens eine Mobilfunkendgeräte (MTE1, MTE2) von dem jeweiligen Mobilfunknetz (MN1, MN2) anfordert, in dem das dem bestimmten Teilnehmer zugeordnete mindestens eine Mobilfunkendgerät (MTE1, MTE2) registriert ist, und daß die Dienststeuereinheit (SCP) weiter so ausgestaltet ist, daß sie mittels der angeforderten Statusdaten dasjenige Endgeräte des bestimmten Teilnehmers (A) auswählt, an das der Ruf (C1) zu leiten ist, für den sie getriggert worden ist.

## Claims

1. Method for providing subscribers (A) who are registered with at least one fixed network terminal (TE2) and at least one mobile radio terminal (MTE1, MTE2) in a communication network (KOM) consisting of several fixed networks (FN1) and mobile radio networks (MN1, MN2) with a personal communication service, wherein in the method a service control unit (SCP) is triggered by a service switching centre (SSP1) when the service switching centre (SSP1) recognises a call (C1) directed at such a subscriber and that the service control unit (SCP) controls the forwarding of the call (C1) by the service switching centre (SSP1) to a terminal, selected by the service control unit (SCP), of the registered terminals of the subscriber, **characterised in that**, when it is triggered by the receipt of a service request message (M2) for a call (C1) directed at a specific subscriber (A), by exchanging signalling messages (M3 to M8) the service control unit (SCP) requests status data about the at least one mobile radio terminal (MTE1, MTE2) allocated to the specific subscriber (A) from the respective mobile radio network (MN1, MN2), **in that** the respective at least one mobile radio terminal allocated to the specific subscriber (A) is registered and **in that** by means of the requested status data the service control unit (SCP) selects the terminal of the specific subscriber (A) to which the call (C1) is to be routed, for which the service control unit (SCP) was triggered.

2. Method according to claim 1, **characterised in that** the service control unit (SCP) requests status data about the at least one mobile radio terminal (MTE1, MTE2) allocated to the specific subscriber by exchanging MAP messages.

3. Method according to claim 2, **characterised in that** to request the status data a MAP message (M3) is sent to the home database of the respective mobile radio network (MN1) in which the subscriber data record of the respective at least one mobile radio terminal (MTE1) of the specific subscriber (A) is stored.

4. Method according to claim 1, **characterised in that** the service control unit (SCP) requests the status data by means of a converter (KONV) which converts IN messages to a GSM mechanism for status request.

5. Method according to claim 4, **characterised in that** the converter (KONV) carries out an INAP protocol/MAP protocol conversion.

6. Method according to claim 1, **characterised in that**, to forward the call (C1), the service control unit (SCP) translates the destination subscriber call number of the specific subscriber (A) entered in the call to one of the network-internal call numbers of the terminals (TE2, MTE1, MTE2) of the specific subscriber (A) registered in the communication network (KOM).

7. Method according to claim 1, **characterised in that** several different functional subscriber call numbers are allocated to a subscriber by the service control unit, which relate to different functions of the subscriber and **in that** selection takes place on the basis of the functional subscriber call number entered in the call and the requested status data of the at least one mobile radio terminal allocated to the subscriber.

8. Method according to claim 1, **characterised in that**, if the specific subscriber is registered with a mobile radio terminal in various mobile radio networks, the service control unit requests status data from these various mobile radio networks for this terminal by exchanging signalling messages.

9. Method for call-routing a call (C1) directed at a subscriber (A), who is registered with at least one fixed network terminal (TE2) and at least one mobile radio terminal (MTE1, MTE2) in a communication network (KOM) consisting of several fixed networks (FN1) and mobile radio networks (MN1, MN2), wherein in the method a service switching centre (SSP1) triggers a service control unit (SCP) if the service switching centre (SSP1) recognises a call directed at subscriber (A) and that the service control unit (SCP) controls the forwarding of the call (C1) by the service switching centre (SSP1) to a terminal, selected by the service control unit (SCP), of the registered terminals (TE2, MTE1, MTE2) of the subscriber,
**characterised in that** when it is triggered by the receipt of a service request message (M2) for the call (C1) directed at the subscriber, by exchanging signalling messages (M3 to M8) the service control unit (SCP) requests status data about the at least one mobile radio terminal (MTE1, MTE2) allocated to the subscriber from the respective mobile radio network (MN1, MN2), **in that** the at least one mobile radio terminal allocated to the subscriber is registered and **in that** the service control unit (SCP) selects the terminal of subscriber (A) to which the call (C1) is to be routed by means of the requested status data.

10. Service control unit (SCP) for providing subscribers (A) who are registered with at least one fixed network terminal (TE2) and at least one mobile radio terminal (MTE1, MTE2) in a communication network (KOM) consisting of several fixed networks (FN1) and mobile radio networks (MN1, MN2) with a personal communication service, wherein the service control unit (SCP) is configured in such a way that when it has been triggered by a service switching centre (SSP1, SSP2) for a call (C1) directed at such a subscriber it controls the forwarding of the call (C1) by the service switching centre (SSP1, SSP2) to a selected terminal of the registered terminals (TE2, MTE1, MTE2) of the subscriber,
**characterised in that** the service control unit (SCP) is further configured in such a way that when it is triggered by the receipt of a service request message (M2) for a call (C1) directed at a specific subscriber (A) it requests status data about the at least one mobile radio terminal (MTE1, MTE2) allocated to the specific subscriber (A) from the respective mobile radio network (MN1, MN2) by exchanging signalling messages (M3 to M8) **in that** the at least one mobile radio terminal (MTE1, MTE2) allocated to the specific subscriber is registered and **in that** the service control unit (SCP) is further configured in such a way that by means of the requested status data it selects the terminal of the specific subscriber (A) to which the call (C1) is to be routed, for which it was triggered.

## Revendications

1. Procédé pour mettre un service de communication personnel à la disposition d'abonnés (A) qui sont enregistrés avec au moins un terminal de réseau fixe (TE2) et au moins un terminal de radiocommunication mobile (MTE1, MTE2) dans un réseau de communication (KOM) composé de plusieurs réseaux fixes (FN1) et réseaux de radiocommunication mobile (MN1, MN2), un point de commande de service (SCP) étant, avec le procédé, déclenché par un point de commutation de services (SSP1) lorsque le point de commutation de services (SSP1) détecter un appel (C1) adressé à un tel abonné et que le point de commande de service (SCP) commande le transfert de l'appel (C1) à travers le point de commutation de services (SSP1) à un terminal sélectionné par le point de commande de service (SCP) parmi les terminaux enregistrés de l'abonné, **caractérisé en ce que** le point de commande de service (SCP), lorsqu'il est déclenché par la réception d'un message de demande de service (M2) pour un appel (C1) adressé à un abonné (A) donné, demande auprès du réseau mobile (MN1, MN2) correspondant dans lequel est enregistré l'au moins un terminal de radiocommunication mobile (MTE1, MTE2) affecté à l'abonné (A) donné, en échangeant des messages de signalisation (M3 à M8), des données d'état sur l'au moins un terminal de radiocommunication mobile (MTE1, MTE2) affecté à l'abonné (A) donné, et que le point de commande de service (SCP), au moyen des données d'état demandées, sélectionne le terminal de l'abonné (A) donné auquel il faut acheminer l'appel (C1) pour lequel le point de commande de service (SCP) a été déclenché.

2. Procédé selon la revendication 1, **caractérisé en ce que** le point de commande de service (SCP) demande des données d'état sur l'au moins un terminal de radiocommunication mobile (MTE1, MTE2) affecté à l'abonné donné en échangeant des messages MAP.

3. Procédé selon la revendication 2, **caractérisé en ce que** pour demander les données d'état, un message MAP (M3) est envoyé à la base de données de rattachement du réseau de radiocommunication mobile (MN1) correspondant dans laquelle est enregistré le jeu de données d'abonné de l'au moins un terminal de radiocommunication mobile (MTE1) correspondant de l'abonné (A) donné.

4. Procédé selon la revendication 1, **caractérisé en ce que** le point de commande de service (SCP) demande les données d'état au moyen d'un convertisseur (KONV) qui convertit les messages IN en un mécanisme GSM d'interrogation de l'état.

5. Procédé selon la revendication 4, **caractérisé en ce que** le convertisseur (KONV) effectue une conversion protocole INAP / protocole MAP.

6. Procédé selon la revendication 1, **caractérisé en ce que** le point de commande de service (SCP), pour transférer l'appel (C1), convertit le numéro d'appel d'abonné destinataire de l'abonné (A) donné enregistré dans l'appel en l'un des numéros d'appel internes au réseau des terminaux (TE2, MTE1, MTE2) de l'abonné (A) donné enregistrés dans le réseau de communication (KOM).

7. Procédé selon la revendication 1, **caractérisé en ce que** le point de commande de service affecte à un abonné plusieurs numéros d'appel d'abonné fonctionnellement différents qui concernent des fonctions différentes de l'abonné et que la sélection s'effectue sur la base du numéro d'appel d'abonné fonctionnel enregistré dans l'appel et des données d'état demandées de l'au moins un terminal de radiocommunication mobile affecté à l'abonné.

8. Procédé selon la revendication 1, **caractérisé en ce que**, lorsque l'abonné donné est enregistré dans différents réseaux de radiocommunication mobile avec un terminal de radiocommunication mobile, le point de commande de service demande des données d'état pour ce terminal auprès de ces différents réseaux de radiocommunication mobile en échangeant des messages de signalisation.

9. Procédé d'acheminement d'un appel (C1) qui est destiné à un abonné (A) qui est enregistré avec au moins un terminal de réseau fixe (TE2) et au moins un terminal de radiocommunication mobile (MTE1, MTE2) dans un réseau de communication (KOM) composé de plusieurs réseaux fixes (FN1) et réseaux de radiocommunication mobile (MN1, MN2), un point de commutation de services (SSP1) déclenchant, lors du procédé, un point de commande de service (SCP) lorsque le point de commutation de services (SSP1) détecte un appel adressé à un l'abonné (A) et que le point de commande de service (SCP) commande le transfert de l'appel (C1) à travers le point de commutation de services (SSP1) à un terminal sélectionné par le point de commande de service (SCP) parmi les terminaux (TE2, MTE1, MTE2) enregistrés de l'abonné, **caractérisé en ce que** le point de commande de service (SCP), lorsqu'il est déclenché par la réception d'un message de demande de service (M2) pour un appel (C1) adressé à l'abonné, demande auprès du réseau mobile (MN1, MN2) correspondant dans lequel est enregistré l'au moins un terminal de radiocommunication mobile affecté à l'abonné, en échangeant des messages de signalisation (M3 à M8), des données d'état sur l'au moins un terminal de radiocommunication mobile (MTE1, MTE2) affecté à l'abonné, et que le point de commande de service (SCP), au moyen des données d'état demandées, sélectionne le terminal de l'abonné (A) auquel il faut acheminer l'appel (C1).

10. Point de commande de service (SCP) pour mettre un service de communication personnel à la disposition d'abonnés (A) qui sont enregistrés avec au moins un terminal de réseau fixe (TE2) et au moins un terminal de radiocommunication mobile (MTE1, MTE2) dans un réseau de communication (KOM) composé de plusieurs réseaux fixes (FN1) et réseaux de radiocommunication mobile (MN1, MN2), le point de commande de service (SCP) étant configuré de telle sorte que lorsqu'il est déclenché par un point de commutation de services (SSP1, SSP2) pour un appel (C1) adressé à un tel abonné, il commande le transfert de l'appel (C1) à travers le point de commutation de services (SSP1, SSP2) à un terminal sélectionné parmi les terminaux (TE2, MTE1, MTE2) enregistrés de l'abonné, **caractérisé en ce que** le point de commande de service (SCP), lorsqu'il est déclenché par la réception d'un message de demande de service (M2) pour un appel (C1) adressé à un abonné (A) donné, demande auprès du réseau mobile (MN1, MN2) correspondant dans lequel est enregistré l'au moins un terminal de radiocommunication mobile (MTE1, MTE2) affecté à l'abonné donné, en échangeant des messages de signalisation (M3 à M8), des données d'état sur l'au moins un terminal de radiocommunication mobile (MTE1, MTE2) affecté à l'abonné (A) donné, et que le point de commande de service (SCP) est en plus configuré de telle sorte qu'il sélectionne, au moyen des données d'état demandées, le terminal de l'abonné (A) donné auquel il faut acheminer l'appel (C1) pour lequel il a été déclenché.
